# NEUE EUROPÄISCHE PATENTSCHRIFT

(11) **EP 1 474 485 B2**
(45) Veröffentlichungstag und Bekanntmachung des Hinweises auf die Entscheidung über den Einspruch: **04.11.2015**
(45) Hinweis auf die Patenterteilung: 25.05.2011
(21) Anmeldenummer: 03737288.5
(22) Anmeldetag: 30.01.2003
(51) Int. Cl.: C09B 67/20, C09B 67/42, C09D 11/00, C09C 3/10

(54) **PIGMENTZUBEREITUNGEN**
PIGMENT PREPARATIONS
PREPARATIONS PIGMENTAIRES

(30) Priorität: 04.02.2002 DE 10204583; 24.06.2002 DE 10228199
(43) Veröffentlichungstag der Anmeldung: 10.11.2004
(73) Patentinhaber: BASF SE, 67056 Ludwigshafen (DE)
(72) Erfinder: REISACHER, Hansulrich, 67133 Maxdorf (DE); GONZALEZ GOMEZ, Juan, Antonio, 67063 Ludwigshafen (DE)
(86) Internationale Anmeldenummer: PCT/EP2003/000921
(87) Internationale Veröffentlichungsnummer: WO 2003/066743

(56) Entgegenhaltungen:
- WO-A1-01/93677
- DE-A1- 19 801 759
- DE-A1- 19 905 269
- US-A- 4 456 485
- US-A- 5 282 898
- DATABASE WPI Section Ch, Week 199510 Derwent Publications Ltd., London, GB; Class A97, AN 1995-070145 XP002243813 & JP 06 345566 A (KAWAMURA KAGAKU KK), 20. Dezember 1994 (1994-12-20)
- DATABASE WPI Section Ch, Week 197638 Derwent Publications Ltd., London, GB; Class E19, AN 1976-71102X XP002243814 & JP 51 088523 A (SAKAKIBARA M), 3. August 1976 (1976-08-03)

## Beschreibung

Die vorliegende Erfindung betrifft neue feste Pigmentzubereitungen, welche als wesentliche Bestandteile
(A) mindestens 60 Gew.-% mindestens eines Pigments,
(B) 10 bis 40 Gew.-% mindestens eines nichtionischen oberflächenaktiven Additivs auf der Basis von Polyethern, wobei die feste Pigmentzubereitungen als Komponente (B) Alkylenoxidblockcopolymere und/oder Alkylenoxidaddukte an mindestens bifunktionelle Amine oder Alkohole enthalten und
(C) 0,1 bis 10 Gew.-% mindestens eines anionischen oberflächenaktiven Additivs auf der Basis von Sulfonaten, Sulfaten, Phosphonaten oder Phosphaten
enthalten, wobei die Summe der Gewichtsprozente 100 Gew.-% nicht überschreitet.

Außerdem betrifft die Erfindung die Herstellung dieser festen Pigmentzubereitungen und ihre Verwendung zum Einfärben von hochmolekularen organischen und anorganischen Materialien.

Zur Pigmentierung von flüssigen Systemen, wie Anstrichmitteln, Lacken, Dispersions- und Druckfarben, werden üblicherweise Pigmentpräparationen eingesetzt, die Wasser, organisches Lösungsmittel oder Mischungen davon enthalten. Neben anionischen, kationischen, nichtionischen oder amphoteren Dispergiermitteln müssen diesen Pigmentpräparationen in der Regel weitere Hilfsmittel, wie Eintrocknungsverhinderer, Mittel zur Erhöhung der Gefrierbeständigkeit, Verdicker und Antihautmittel, zur Stabilisierung zugesetzt werden.

Es bestand Bedarf an neuen Pigmentzubereitungen, die in ihren koloristischen Eigenschaften und der Dispergierbarkeit den flüssigen Präparationen vergleichbar sind, jedoch nicht die genannten Zusätze erfordern und leichter zu handhaben sind. Durch einfaches Trocknen der flüssigen Präparationen können jedoch keine festen Pigmentzubereitungen erhalten werden, die vergleichbare Anwendungseigenschaften aufweisen.

In den US-A-4 056 402 und 4 127 422 werden trockene, nicht staubende Pigmentzubereitungen für wasserbasierende Beschichtungssysteme beschrieben. Diese Pigmentzubereitungen enthalten jedoch neben nichtionischen Dispergiermitteln als wesentlichen Bestandteil mindestens 10 Gew.% wasserlösliche Celluloseether bzw. wasserdispergierbare Polyvinylverbindungen und unterseheiden sich daher von den erfindungsgemäßen festen Pigmentzubereitungen.

Aus den EP-A-84 645 und 403 917 sind hochkonzentrierte, feste Pigmentzubereitungen für die Pigmentierung von wäßrigen, alkoholischen und wäßrig-alkoholischen Lacken und Druckfarben bekannt, die bis zu 30 Gew.-% eines Additivs auf der Basis von Umsetzungsprodukten von mindestens zweiwertigen Aminen mit Propylenoxid und Ethylenoxid, jedoch kein anionlsches Additiv enthalten.

Die DE-A-198 01 759 beschreibt wässrige Pigmentpräparationen, die sulfonatgruppenhaltige Dispergiermittel als auch Polyetherpolyole enthalten.

In der DE-A-199 05 269 werden feste Pigmentzubereitungen beschrieben, die nur nichtionische Dispergiermittel oder < 8 Gew.-% Mischungen von nichtionischen und anionischen Dispergiermitteln sowie stets als zusätzlichen wesentlichen Bestandteil einen Verdicker auf Basis von gegebenenfalls teilhydriertem Polyvinylalkohol oder von anionischen Polyhydroxyverbindungen enthalten.

Der Erfindung lag die Aufgabe zugrunde, feste Pigmentzubereitungen bereitzustellen, die sich durch insgesamt vorteilhafte Anwendungseigenschaften, insbesondere hohe Farbstärke und besonders leichte Dispergierbarkeit (Einrührbarkeit, "Stir-in"-Verhalten) in Anwendungsmedien verschiedenster Art, auszeichnen.

Demgemäß wurden feste Pigmentzubereitungen gefunden, welche als wesentliche Bestandteile
(A) mindestens 60 Gew.-% mindestens eines Pigments,
(B) 10 bis 40 Gew.-% mindestens eines nichtionischen oberflächenaktiven Additivs auf der Basis von Polyethern, wobei die feste Pigmentzubereitungen als Komponente (B) Alkylenoxidblockcopolymere und/oder Alkylenoxidaddukte an mindestens bifunktionelle Amine oder Alkohole enthalten und
(C) 0,1 bis 10 Gew.-% mindestens eines anionischen oberflächenaktiven Additivs auf der Basis von Sulfonaten, Sulfaten, Phosphonaten oder Phosphaten
enthalten, wobei die Summe der Gewichtsprozente 100 Gew.-% nicht überschreitet.

Außerdem wurde ein Verfahren zur Herstellung der festen Pigmentzubereitungen gefunden, welches dadurch gekennzeichnet ist, daß man das Pigment (A) zunächst in wäßriger, zumindest einen Teil des Additivs (B) enthaltender Suspension entweder in Gegenwart des Additivs (C) einer Naßzerkleinerung unterwirft oder das Additiv (C) anschließend zugibt und die Suspension dann, gegebenenfalls nach Zugabe der restlichen Menge Additiv (B), trocknet. Weiterhin wurde ein Verfahren zur Einfärbung von hochmolekularen organischen und anorganischen Materialen gefunden, welches dadurch gekennzeichnet ist, daß man die Pigmentzubereitungen durch Einrühren oder Schütteln in diese Materialien einträgt.

Die erfindungsgemäßen festen Pigmentzubereitungen enthalten als wesentliche Bestandteile das Pigment (A), das nichtionische oberflächenaktive Additiv (B) und das anionische oberflächenaktive Additiv (C).

Als Komponente (A) können in den erfindungsgemäßen festen Pigmentzubereitungen organische oder anorganische Pigmente enthalten sein. Selbstverständlich können die Pigmentzubereitungen auch Mischungen verschiedener organischer oder verschiedener anorganischer Pigmente oder Mischungen von organischen und anorganischen Pigmenten enthalten.

Die Pigmente liegen in feinteiliger Form vor. Die Pigmente haben dementsprechend üblicherweise mittlere Teilchengrößen von 0,1 bis 5 µm.

Bei den organischen Pigmenten handelt es sich üblicherweise um organische Bunt- und Schwarzpigmente. Anorganische Pigmente können ebenfalls Farbpigmente (Bunt-, Schwarz- und Weißpigmente) sowie Glanzpigmente und die üblicherweise als Füllstoffe eingesetzten anorganischen Pigmente sein.

Im folgenden seien als Beispiele für geeignete organische Farbpigmente genannt:
- Monoazopigmente: C.I. Pigment Brown 25;
   C.I. Pigment Orange 5, 13, 36, 38, 64 und 67;
   C.I. Pigment Red 1, 2, 3, 4, 5, 8, 9, 12, 17, 22, 23, 31, 48:1, 48:2, 48:3, 48:4, 49, 49:1, 51:1, 52:1, 52:2, 53, 53:1, 53:3, 57:1, 58:2, 58:4, 63, 112, 146, 148, 170, 175, 184, 185, 187, 191:1, 208, 210, 245, 247 und 251;
   C.I. Pigment Yellow 1, 3, 62, 65, 73, 74, 97, 120, 151, 154, 168, 181, 183 und 191;
   C.I. Pigment Violet 32;
- Disazopigmente: C.I. Pigment Orange 16, 34, 44 und 72; C.I. Pigment Yellow 12, 13, 14, 16, 17, 81, 83, 106, 113, 126, 127, 155, 174, 176, 180 und 188;
- Disazokondensationspigmente: C.I. Pigment Yellow 93, 95 und 128; C.I. Pigment Red 144, 166, 214, 220, 221, 242 und 262; C.I. Pigment Brown 23 und 41;
- Anthanthronpigmente: C.I. Pigment Red 168;
- Anthrachinonpigmente: C.I. Pigment Yellow 147, 177 und 199; C.I. Pigment Violet 31;
- Anthrapyrimidinpigmente: C.I. Pigment Yellow 108;
- Chinacridonpigmente: C.I. Pigment Orange 48 und 49; C.I. Pigment Red 122, 202, 206 und 209; C.I. Pigment Violet 19;
- Chinophthalonpigmente: C.I. Pigment Yellow 138;
- Diketopyrrolopyrrolpigmente: C.I. Pigment Orange 71, 73 und 81; C.I. Pigment Red 254, 255, 264, 270 und 272;
- Dioxazinpigmente: C.I. Pigment Violet 23 und 37; C.I. Pigment Blue 80;
- Flavanthronpigmente: C.I. Pigment Yellow 24;
- Indanthronpigmente: C.I. Pigment Blue 60 und 64;
- Isoindolinpigmente: C.I. Pigment Orange 61 und 69; C.I. Pigment Red 260; C.I. Pigment Yellow 139 und 185;
- Isoindolinonpigmente: C.I. Pigment Yellow 109, 110 und 173;
- Isoviolanthronpigmente: C.I. Pigment Violet 31;
- Metallkomplexpigmente: C.I. Pigment Red 257; C.I. Pigment Yellow 117, 129, 150, 153 und 177; C.I. Pigment Green 8;
- Perinonpigmente: C.I. Pigment Orange 43; C.I. Pigment Red 194;
- Perylenpigmente: C.I. Pigment Black 31 und 32; C.I. Pigment Red 123, 149, 178, 179, 190 und 224; C.I. Pigment Violet 29;
- Phthalocyaninpigmente: C.I. Pigment Blue 15, 15:1, 15:2, 15:3, 15:4, 15:6 und 16; C.I. Pigment Green 7 und 36;
- Pyranthronpigmente: C.I. Pigment Orange 51 ; C.I. Pigment Red 216;
- Pyrazolochinazotonpigmente: C.L Pigment Orange 67; C.I. Pigment Red 251 ;
- Thioindigopigmente: C.I. Pigment Red 88 und 181; C.I, Pigment Violet 38;
- Triarylcarboniumpigmente: C.I. Pigment Blue 1, 61 und 62; C.I. Pigment Green 1 ; C.I. Pigment Red 81, 81:1 und 169; C.I. Pigment Violet 1, 2, 3 und 27;
- C.I. Pigment Black 1 (Anilinschwarz);
- C.I. Pigment Yellow 101 (Aldazingelb);
- C.I. Pigment Brown 22.

Geeignete anorganische Farbpigmente sind z.B.:
- Weißpigmente: Titandioxid (C.I. Pigment White 6), Zinkweiß, Farbenzinkoxid; Zinksulfid, Lithopone;
- Schwarzpigmente: Eisenoxidschwarz (C.I. Pigment Black 11),
   Eisen-Mangan-Schwarz, Spinellschwarz (C.I. Pigment Black 27); Ruß (C.I, Pigment Black 7);
- Buntpigmente: Chromoxid, Chromoxdhydratgrün; Chromgrün (C.I. Pigment Green 48); Cobaltgrün (C.I. Pigment Green 50); Ultramaringrün;
   Kobaltblau (C.I. Pigment Blue 28 und 36; C.I. Pigment Blue 72); Ultramarinblau; Manganblau;
   Ultramarinviolett; Kobalt- und Manganviolett;
   Eisenoxidrot (C.I. Pigment Red 101); Cadmiumsulfoselenid (C.I. Pigment Red 108); Cersulfid (C.I. Pigment Red 265); Molybdatrot (C.I. Pigment Red 104): Ultramarinrot;
   Eisenoxidbraun (C.I. Pigment Brown 6 und 7), Mischbraun, Spinell- und Korundphasen (C.I. Pigment Brown 29, 31, 33, 34, 35, 37, 39 und 40), Chromtitangelb (C.I. Pigment Brown 24), Chromorange;
   Cersulfid (C.I. Pigment Orange 75); Elsenoxidgelb (C.I. Pigment Yellow 42); Nickeltitangelb (C.I. Pigment Yellow 53; C.I. Pigment Yellow 157, 158, 159, 160, 161, 162, 163, 164 und 189); Chromtitangelb; Spinellphasen (C.I. Pigment Yellow 119); Cadmiumsulfid und Cadmiumzinksulfid (C.I. Pigment Yellow 37 und 35); Chromgelb (C.I. Pigment Yellow 34); Bismutvanadat (C.I. Pigment Yellow 184).

Als Beispiele für üblicherweise als Füllstoffe eingesetzte anorganische Pigmente seien transparentes Silicaumdioxid, Quarzmehl, Aluminiumoxid, Aluminiumhydroxid, natürliche Glimmer, natürliche und gefällte Kreide und Bariumsulfat genannt.

Bei den Glanzpigmenten handelt es sich um einphasig oder mehrphasig aufgebaute plättchenförmige Pigmente, deren Farbenspiel durch das Zusammenspiel von Interferenz-, Reflexions- und Absorptionsphänomenen geprägt ist. Als Beispiele seien Aluminiumplättchen und ein- oder mehrfach, insbesondere mit Metalloxiden beschichtete Aluminium-, Eisenoxid- und Glimmerplättchen genannt

Als Komponente (B) enthalten die erfindungsgemäßen festen Pigmentzubereitungen mindestens ein nichtionisches oberflächenaktives Additiv auf der Basis von Polyethern.

Bei den Polyethern handelt es um Alkylenoxidblockcopolymere und/oder Alkylenoxidaddukte an mindestens bifunktionelle Alkohole oder Amine. Erfindungsgemäß sol dabei unter dem Begriff Alkylenoxid auch arylsubstiutiertes Alkylenoxid, insbesondere phenylsubstituiertes Ethylenoxid, verstanden werden.

Erfindungsgemäß sind vor allem Alkylenoxidblockcopolymere als Komponente (B) geeignet. Offenbart sind auch ungemischte Polyalkylenoxide, vorzugsweise C₂-C₄-Alkylenoxide und phenylsubstituierte C₂-C₄-Alkylenoxide, insbesondere Polyethylenoxiden, Polypropylenoxiden und Poly(phenylethylenoxide).

Ganz besonders geeignet sind dabei Blockcopolymere, die Polypropylenoxid- und Polyethylenoxidblöcke oder auch Poly(phenylethylenoxid)- und Polyethylenoxidblöcke aufweisen. Offenbart sind auch Blockcopolymere, die wie die ungemischten Polyalkylenoxide durch Polyaddition der Alkylenoxide an Starterverbindungen, wie gesättigte oder ungesättigte aliphatische und aromatische Alkohole, gesättigte oder ungesättigte aliphatische und aromatische Amine, gesättigte oder ungesättigte aliphatische Carbonsäuren und Carbonsäureamide, erhalten werden können. Bei Einsatz von Ethylenoxid und Propylenoxid können diese Starterverbindungen zunächst mit Ethylenoxid und dann mit Propylenoxid oder vorzugsweise zunächst mit Propylenoxid und dann mit Ethylenoxid umgesetzt werden. Üblicherweise werden 1 bis 300 mol, bevorzugt 3 bis 150 mol, Alkylenoxid je mol Startermolekül eingesetzt.

Geeignete aliphatische Alkohole enthalten dabei in der Regel 6 bis 26 C-Atome, bevorzugt 8 bis 18 C-Atome, und können unverzweigt, verzweigt oder cyclisch aufgebaut sein. Als Beispiele seien Octanol, Nonanol, Decanol, Isodecanol, Undecanol, Dodecanol, 2-Butyloctanol, Tridecanol, Isotridacanol, Tetradecanol, Pentadecanol, Hexadecanol, 2-Hexyldecanol, Heptadecanol, Octadecanol, 2-Heptylundecanol, 2-Octykiecanol, 2-Nonyltridecanol, 2-Decyltetradecanol, Oleylalkohol und 9-Octadecenol sowie auch Mischungen dieser Alkohole wie C₈/C₁₀-, C₁₃/C₁₅- und C₁₆/C₁₈-Alkohole, und Cyclopentanol und Cyclohexanol genannt. Von besonderem Interesse sind die gesättigten und ungesättigten Fettalkohole, die durch Fettspaltung und Reduktion aus natürtichen Rohstoffen gewonnen werden, und die synthetischen Fettalkohole aus der Oxosynthese. Die Alkylenoxidaddukte an diese Alkohole weisen üblicherweise mittlere Molekulargewichte Mₙ von 200 bis 5000, vor allem von 400 bis 2000 auf.

Als Beispiele für die obengenannten aromatischen Alkohole seien neben α- und β-Naphthol und deren C₁-C₄-Al-kylderlvaten insbesondere Phenol und seine C₁-C₁₂-Alkylderivate, wie Hexylphenol, Heptylphenol, Octylphenol, Nonyl-phenol, Isononylphenol, Undecylphenol, Dodecylphenol, Di- und Tributylphenol und Dinonylphenol genannt.

Geeignete aliphatische Amine entsprechen den oben aufgeführten aliphatischen Alkoholen. Besondere Bedeutung haben auch hier die gesättigten und ungesättigten Fettamine, die vorzugsweise 14 bis 20 C-Atome aufweisen. Als aromatische Amine seien beispielsweise Anilin und seine Derivate genannt

Als aliphatische Carbonsäuren eignen sich insbesondere gesättigte und ungesättigte Fettsäuren, die bevorzugt 14 bis 20 C-Atome enthalten, und hydrierte, teilhydrierte und unhydrierte Harzsäuren sowie auch mehrwertige Carbonsäuren, z.B. Dicarbonsäuren, wie Maleinsäure.

Geeignete Carbonsäureamide leiten sich von diesen Carbonsäuren ab.

Erfindungsgemäß können die festen Pigmentzubereitungen als Komponente (B) Alkylenoxidaddukte an mindestens bifunktionelle Amine oder Alkohole enthalten.

Als mindestens bifunktionelle Amine sind zwei- bis fünfwertige Amine bevorzugt, die insbesondere der Formel H₂N-(R-NR¹)ₙ-H (R: C₂-C₆-Alkylen; R¹: Wasserstoff oder C₁-C₆-Alkyl; n: 1 bis 5) entsprechen. Im einzelnen seien beispielhaft genannt: Ethytendiamin, Diethylentriamin, Triethylentetramin, Tetraethylenpentamin, Propylendiamin-1,3, Dipropylentriamin, 3-Amino-1-ethylenaminopropan, Hexamethylendiamin, Dihexamethylentriamin, 1,6-Bis-(3-amino-propylamino)hexan und N-Methyldipropylentriamin, wobei Hexamethylendiamin und Diethylentriamin besonders bevorzugt sind und Ethylendiamin ganz besonders bevorzugt ist.

Vorzugsweise werden diese Amine zunächst mit Propylenoxid und anschließend mit Ethylenoxid umgesetzt. Der Gehalt der Blockcopolymere an Ethylenoxid liegt üblicherweise bei etwa 10 bis 90 Gew.-%.

Die Blockcopolymere auf Basis mehrwertiger Amine weisen in der Regel mittlere Molekulargewichte Mₙ von 1000 bis 40000, vorzugsweise 1500 bis 30000, auf.

Als mindestens bifunktionelle Alkohole sind zwei- bis fünfwertige Alkohole bevorzugt. Beispielsweise seien C₂-C₆-Alkylenglykole und die entsprechenden Di- und Polyalkylenglykole, wie Ethylenglykol, Propylenglykol-1,2 und -1,3, Butylenglykol-1,2 und -1,4, Hexylenglykol-1,6, Dipropylenglykol und Polyethylenglykol, Glycerin und Pentaerythrit genannt, wobei Ethylenglykol und Polyethylenglykol besonders bevorzugt und Propylenglykol und Dipropylenglykol ganz besonders bevorzugt sind.

Besonders bevorzugte Alkylenoxidaddukte an mindestens bifunktionelle Alkohole weisen einen zentralen Polypropylenoxidblock auf, gehen also von einem Propylenglykol oder Polypropylenglykol aus, das zunächst mit weiterem Propylenoxid und dann mit Ethylenoxid umgesetzt wird. Der Gehalt der Blockcopolymere an Ethylenoxid liegt üblicherweise bei 10 bis 90 Gew.-%.

Die Blockcopolymere auf Basis mehrwertiger Alkohole weisen im allgemeinen mittlere Molekulargewichte Mₙ von 1000 bis 20000, vorzugsweise 1000 bis 15000, auf.

Derartige Alkylenoxidblockcopolymere sind bekannt und im Handel z.B. unter den Namen Tetronic® und Pluronic® (BASF) erhaltlich.

In Abhängigkeit von dem Anwendungsmedlum, In dem die erfindungsgemäßen festen Pigmentzubereitungen eingesetzt werden sollen, wählt man Alkylenoxidblockcopolymere (B) mit unterschiedlichen HLB-Werten (Hydrophilic-Lipophilic Balance) aus.

So sind für den Einsatz in wäßrigen, wäßrig/alkoholischen und alkoholischen Systemen Alkylenoxidblockcopolymere (B) mit HLB-Werten von etwa ≥ 10 bevorzugt, was einem Ethylenoxidanteil an den Copolymeren von in der Regel ≥ 25 Gew.-% entspricht.

Sollen die erfindungsgemäßen Pigmentgranulate in kohlenwasserstoffbasierenden (z.B. mineralöl- und xylolhaltigen) Systemen oder Systemen auf Nitrocellulosebasis zum Einsatz kommen, so sind Alkylenoxidblockcopolymere (B) mit HLB-Werten von etwa < 10 besonders geeignet, was einem Ethylenoxidanteil an den Copolymeren von im allgemeinen < 25 Gew.-% entspricht.

Als Komponente (C) enthalten die erfindungsgemäßen festen Pigmentzubereitungen mindestens ein anionisches oberflächenaktives Additiv auf der Basis von Sulfonaten, Sulfaten, Phosphonaten oder Phosphaten.

Beispiele für geeignete Sulfonate sind aromatische Sulfonate, wie p-C₈-C₂₀-Alkylbenzolsulfonate, Di-(C₁-C₈-alkyl)naphthalinsulfonate und Kondensationsprodukte von Naphthalinsulfonsäuren mit Formaldehyd, und aliphatische Sulfonate, wie C₁₂-C₁₈-Alkansulfonate, α-Sulfofettsäure-C₂-C₈-alkylester, Sulfobernsteinsäureester und Alkoxy-, Acyloxy- und Acylaminoalkansulfonate.

Bevorzugt sind die Arylsulfonate, wobei die Di-(C₁-C₈-alkyl)naphthalinsulfonate besonders bevorzugt sind. Ganz besonders bevorzugt sind Diisobutyl- und Diisopropylnaphthalinsulfonat.

Beispiele für geeignete Sulfate sind C₈-C₂₀-Alkylsulfate.

Eine weitere wichtige Gruppe anionischer Additive (C) bilden die Sulfonate, Sulfate, Phosphonate und Phosphate der als nichtionische Additive (B) genannten Polyether.

Diese können durch Umsetzung mit Phosphorsäure, Phosphorpentoxid und Phosphonsäure bzw. Schwefelsäure und Sulfonsäure in die Phosphorsäuremono- oder -diester und Phosphonsäureester bzw. die Schwefelsäuremonoester und Sulfonsäureester überführt werden. Diese sauren Ester liegen, wie die weiter oben aufgeführten Sulfonate und Sulfate, bevorzugt in Form wasserlöslicher Salze, insbesondere als Alkalimetallsalze, vor allem Natriumsalze, und Ammoniumsalze vor, sie können jedoch auch in Form der freien Säuren eingesetzt werden.

Bevorzugte Phosphate und Phosphonate leiten sich vor allem von alkoxylierten, insbesondere ethoxylierten, Fett- und Oxoalkoholen, Alkylphenolen, Fettaminen, Fettsäuren und Harzsäuren ab, bevorzugte Sulfate und Sulfonate basieren insbesondere auf alkoxylierten, vor allem ethoxylierten, Fettalkoholen, Alkylphenolen und Aminen, auch mehrwertigen Aminen, wie Hexamethylendiamin.

Derartige anionische oberflächenaktive Additive sind bekannt und im Handel z.B. unter den Namen Nekal^{®} (BASF), Tamol^{®} (BASF), Crodafos^{®} (Croda), Rhodafac^{®} (Rhodia), Maphos^{®} (BASF), Texapon^{®} (Cognis), Empicol^{®} (Albright & Wilson), Matexil^{®} (ICI), Soprophor^{®} (Rhodia) und Lutensit^{®} (BASF) erhältlich.

Die erfindungsgemäßen festen Pigmentzubereitungen enthalten 60 bis 90 Gew.-%, bevorzugt 70 bis 85 Gew.-%, der Komponente (A), 10 bis 40 Gew.-%, vorzugsweise 10 bis 30 Gew.-%, der Komponente (B) und 0,1 bis 10 Gew.-%, insbesondere 0,2 bis 8 Gew.-%, der Komponente (C).

Sie können vorteilhaft nach dem ebenfalls erfindungsgemäßen Herstellungsverfahren erhalten werden, indem man das Pigment (A) zunächst in wäßriger, zumindest einen Teil des nichtionischen Additivs (B) enthaltender Suspension entweder in Gegenwart des Additivs (C) einer Naßzerkleinerung unterwirft oder das Additiv (C) anschließend zugibt und die Suspension dann, gegebenenfalls nach Zugabe der restlichen Menge Additiv (B), trocknet.

Das Pigment (A) kann bei dem erfindungsgemäßen Verfahren als trockenes Pulver oder in Form eines Preßkuchens eingesetzt werden.

Bei dem eingesetzten Pigment (A) handelt es sich vorzugsweise um ein gefinishtes Produkt, d.h. die Primärkorngröße des Pigments ist bereits auf den für die Anwendung gewünschten Wert eingestellt. Dieser Pigmentfinish empfiehlt sich insbesondere bei organischen Pigmenten, da die bei der Pigmentsynthese anfallende Rohware in der Regel nicht direkt für die Anwendung geeignet ist. Bei anorganischen Pigmenten, z.B. bei Oxid- und Bismutvanadatpigmenten, kann die Einstellung der Primärkorngröße auch bei der Pigmentsynthese erfolgen, so daß die anfallenden Pigmentsuspensionen direkt beim erfindungsgemäßen Verfahren eingesetzt werden können.

Da das gefinishte Pigment (A) bei der Trocknung bzw. auf dem Filteraggregat üblicherweise wieder reagglomeriert, wird es in wäßriger Suspension einer Naßzerkleinerung, z.B. einer Mahlung in einer Rührwerkskugelmühle, unterzogen.

Bei der Naßzerkleinerung sollte zumindest ein Teil des in der fertigen Pigmentzubereitung enthaltenen Additivs (B) anwesend sein, vorzugsweise setzt man die gesamte Menge Additiv (B) vor der Naßzerkleinerung zu.

Das Additiv (C) kann vor, während oder nach der Naßzerkleinerung zugesetzt werden.

In Abhängigkeit von der gewählten Trocknungsart - Sprühgranulierung und Wirbelschichttrocknung, Sprühtrocknung, Trocknung im Schaufeltrockner, Eindampfen und anschließende Zerkleinerung - kann die Teilchengröße der erfindungsgemäßen festen Pigmentzubereitungen gezielt gesteuert werden.

Bei Sprüh- und Wirbelschichtgranulierung können grobteilige Granulate mit mittleren Korngrößen von 50 bis 5000 µm, insbesondere 100 bis 1000 µm, erhalten werden. Durch Sprühtrocknung werden üblicherweise Granulate mit mittleren Korngrößen < 20 µm erhalten. Feinteilige Zubereitungen können bei der Trocknung im Schaufeltrockener und beim Eindampfen mit anschließender Mahlung erhalten werden. Vorzugsweise liegen die erfindungsgemäßen festen Pigmentzubereitungen jedoch in Granulatform vor.

Die Sprühgranulierung führt man vorzugsweise in einem Sprühturm mit Einstoffdüse durch. Die Suspension wird hier in Form größerer Tropfen versprüht, wobei das Wasser verdampft. Die Additive (B) und (C) schmelzen bei den Trocknungstemperaturen auf und führen so zur Bildung eines weitgehend kugelförmigen Granulats mit besonders glatter Oberfläche (BET-Werte von in der Regel ≤ 15 m²/g, insbesondere ≤ 10 m²/g).

Die Gaseintrittstemperatur im Sprühturm liegt im allgemeinen bei 180 bis 300°C, bevorzugt bei 150 bis 300°C. Die Gasaustrittstemperatur beträgt in der Regel 70 bis 150°C, vorzugsweise 70 bis 130°C.

Die Restfeuchte des erhaltenen Pigmentgranulats liegt in der Regel bei < 2 Gew.-%.

Die erfindungsgemäßen festen Pigmentzubereitungen zeichnen sich bei der Anwendung durch ihre hervorragenden, den flüssigen Pigmentpräparationen vergleichbaren, koloristischen Eigenschaften, insbesondere ihre Farbstärke und Brillanz, ihren Farbton und ihr Deckvermögen, und vor allem durch ihr Stir-in-Verhalten aus, d.h. sie können mit sehr geringem Energieeintrag durch einfaches Einrühren oder Schütteln in den Anwendungsmedien verteilt werden. Dies gilt insbesondere für die grobteiligen Pigmentgranulate, die die bevorzugte Ausführungsform der erfindungsgemäßen festen Pigmentzubereitungen darstellen.

Im Vergleich zu flüssigen Pigmentpräparationen weisen die erfindungsgemäßen festen Pigmentzubereitungen zudem folgende Vorteile auf: Sie haben einen höheren Pigmentgehalt. Während flüssige Präparationen bei der Lagerung zu Viskositätsänderungen neigen und mit Konservierungsmitteln und Mitteln zur Erhöhung der Gefrier- und/oder Eintrocknungsbeständigkeit versetzt werden müssen, zeigen die erfindungsgemäßen festen Pigmentzubereitungen sehr gute Lagerstabilität. Sie sind hinsichtlich Verpackung, Lagerung und Transport wirtschaftlich und ökologisch vorteilhaft. Da sie lösungsmittelfrei sind, weisen sie höhere Flexibilität in der Anwendung auf.

Die erfindungsgemäßen festen Pigmentzubereitungen in Granulatform zeichnen sich durch ausgezeichnete Abriebfestigkeit, geringe Kompaktierungs- bzw. Verklumpungsneigung, gleichmäßige Kornverteilung, gute Schütt-, Riesel- und Dosierfähigkeit sowie Staubfreiheit bei Handling und Applikation aus.

Die erfindungsgemäßen festen Pigmentzubereitungen eignen sich hervorragend zur Einfärbung von hochmolekularen organischen und anorganischen Materialien jeglicher Art. Flüssige Anwendungsmedien können dabei auch rein wäßrig sein, Mischungen von Wasser und organischen Lösungsmitteln, z.B. Alkoholen, enthalten oder nur auf organischen Lösungsmitteln, wie Alkoholen, Glykolethern, Ketonen, z.B. Methylethylketon, Amiden, z.B. N-Methylpyrrolidon und Dimethylformamid, Estern, z.B. Essigsäureethyl- und -butylester und Methoxypropylacetat, aromatischen oder aliphatischen Kohlenwasserstoffen, z.B. Xylol, Mineralöl und Benzin, basieren.

Falls der HLB-Wert des in den erfindungsgemäßen festen Pigmentzubereitungen enthaltenen Additivs (B) nicht wie oben beschrieben auf den Charakter des Anwendungsmediums abgestimmt ist, können die Zubereitungen zunächst in ein mit dem jeweiligen Anwendungsmedium verträgliches Lösungsmittel eingerührt werden, was wiederum mit sehr geringem Energieeintrag möglich ist, und dann in dieses Anwendungsmedium eingetragen werden. So können z.B. Aufschlämmungen von Pigmentzubereitungen mit hohen HLB-Werten in Glykolen oder sonstigen in der Lackindustrie üblichen Lösungsmitteln, wie Methoxypropylacetat, verwendet werden, um die Pigmentzubereitungen mit kohlenwasserstoffbasierenden Systemen oder Systemen auf Nitrocellulosebasis verträglich zu machen.

Als Beispiele für Materialien, die mit den erfindungsgemäßen festen Pigmentzubereitungen eingefärbt werden können, seien genannt: Lacke, z.B. Bautenlacke, Industrielacke, Fahrzeuglacke, strahlungshärtbare Lacke; Anstrichmittel, sowohl für den Bautenaußen- als auch -innenbereich, z.B. Holzanstrichmittel, Kalkfarben, Leimfarben, Dispersionsfarben; Druckfarben, z.B. Offsetdruckfarben, Flexodruckfarben, Toluoltiefdruckfarben, Textildruckfarben, strahlungshärtbare Druckfarben; Tinten, auch Ink-Jet-Tinten; Colorfilter; Baustoffe (üblicherweise wird erst nach trockenem Vermischen von Baustoff und Pigmentzubereitung Wasser zugesetzt), z.B. Silikatputzsysteme, Zement, Beton, Mörtel, Gips; Asphalt, Dichtungsmassen; cellulosehaltige Materialien, z.B. Papier, Pappe, Karton, Holz und Holzwerkstoffe, die lackiert oder anderweitig beschichtet sein können; Klebstoffe; filmbildende polymere Schutzkolloide, wie sie beispielsweise in der Pharmaindustrie verwendet werden; kosmetische Artikel; Detergentien.

Besonders vorteilhaft können die erfindungsgemäßen festen Pigmentzubereitungen als Mischkomponenten in Farbmisch- oder Abtönsystemen eingesetzt werden. Aufgrund ihres Stir-in-Verhaltens können sie dabei direkt als Feststoff zum Einsatz kommen. Gewünschtenfalls können sie jedoch auch zunächst in Basisfarben, Mischlacken und Abtönfarben (insbesondere Farben mit hohem Feststoffgehalt, "HS-Farben") oder noch höher pigmentierte Abtönpasten überführt werden, die dann die Komponenten des Mischsystems darstellen. Die Einstellung des gewünschten Farbtons und damit die Mischung der Farbkomponenten kann visuell über ein System von Farbkarten in möglichst vielen Farbtonabstufungen, die auf Farbstandards, wie RAL, BS und NCS, basieren, erfolgen oder bevorzugt computergesteuert vorgenommen werden, wodurch eine unbegrenzte Anzahl von Farbtönen zugänglich ist ("computer color matching").

### Beispiele

### Herstellung und Prüfung von erfindungsgemäßen festen Pigmentzubereitungen in Granulatform

### Beispiele 1 bis 13:

Die Herstellung der Pigmentgranulate erfolgte, indem eine Suspension von 19 kg Additiv (B) und 80 kg gefinishtem Pigment (A) in 120 kg Wasser in einer Kugelmühle auf einen d₅₀-Wert von 0,8 µm gemahlen und dann nach Zugabe von 1 kg Additiv (C1) (Diisobutylnaphthalinsulfonsäurenatriumsalz) in einem Sprühturm mit Einstoffdüse (Gaseintrittstemperatur 170°C, Gasaustrittstemperatur 80°C) sprühgranuliert wurde.

### Beispiele 14 bis 17:

Die Herstellung der Pigmentgranulate erfolgte, indem eine Suspension von x kg gefinishtem Pigment (A), y kg Additiv (B3) und z kg Additiv (C2) in 150 kg Wasser durch Zugabe von 25 gew.-%iger Natronlauge auf einen pH-Wert von 7 eingestellt, in einer Kugelmühle auf einen d₅₀-Wert von < 1 µm gemahlen und dann in einem Sprühturm mit Einstoffdüse (Gaseintrittstemperatur 165°C, Gasaustrittstemperatur 70°C) sprühgranuliert wurde.

Die Bestimmung der Farbstärke der Pigmentgranulate erfolgte farbmetrisch in der Weißaufhellung (Angabe der Färbeäquivalente FAE, DIN 55986) in einer wasserbasierenden Dispersionsfarbe. Dazu wurde eine Mischung von jeweils 1,25 g Pigmentgranulat und 50 g eines wasserbasierenden Prüfbinders auf Styrol/Acrylatbasis mit einem Weißpigmentgehalt von 16,4 Gew.-% (TiO₂, Kronos 2043) (Prüfbinder 00-1067, BASF) in einem 150 ml-Kunststoffbecher mit einem Schnellrührer 3 min bei 1500 U/min homogenisiert. Die erhaltene Farbe wurde dann mit einer 100 µm-Spiralrakel auf schwarz/weißen Prüfkarton aufgezogen und 30 min getrocknet.

Den jeweils analogen Dispersionsfarben, die mit handelsüblichen wäßrigen Präparationen der Pigmente hergestellt wurden, wurde der FAE-Wert 100 (Standard) zugeordnet. FAE-Werte < 100 bedeuten eine höhere Farbstärke als beim Standard, FAE-Werte > 100 entsprechend eine kleinere Farbstärke.

In Tabelle 1 und 2 sind Einzelheiten zu den hergestellten Pigmentgranulaten sowie die jeweils erhaltenen FAE-Werte zusammengestellt. Als Additive (B) und (C) wurden eingesetzt:
B1: Blockcopolymer auf Basis Ethylendiamin/Propylenoxid/Ethylenoxid mit einem Ethylenoxidgehalt von 40 Gew.-% und einem mittleren Molekulargewicht Mₙ von 12000
B2: Blockcopolymer auf Basis Ethylendiamin/Propylenoxid/Ethylenoxid mit einem Ethylenoxidgehalt von 40 Gew.-% und einem mittleren Molekulargewicht Mₙ von 6700
B3: Propylenoxid/Ethylenoxid/Blockcopolymer mit zentralem Polypropylenoxidblock, einem Ethylenoxidgehalt von 50 Gew.-% und einem mittleren Molekulargewicht Mₙ von 6500
C1: Diisobutylnaphthalinsulfonsäurenatriumsalz
C2: Saurer Phosphorsäureester auf Basis von ethoxyliertem C₈-C₁₀-Oxoalkohol (6 mol EO/mol Alkohol)

**Tabelle 1**

| Bsp. | Pigment (A) | Additiv (B) | d₅₀ [µm] | BET [m²/g] | FAE |
|---|---|---|---|---|---|
| 1 | C.I. P. Y. 42 | B1 | 310 | 5 | 88 |
| 2 | C.I. P. Y. 74 | B1 | 290 | 3 | 100 |
| 3 | C.I. P. Y. 138 | B1 | 290 | 1 | 102 |
| 4 | C.I. P. Y. 184 | B1 | 320 | 1 | 103 |
| 5 | C.I. P. R. 101 | B1 | 310 | 3 | 100 |
| 6 | C.I. P. R. 112 | B1 | 330 | 1 | 98 |
| 7 | C.I. P. R. 122 | B1 | 290 | 1 | 100 |
| 8 | C.I. P. V. 19 | B1 | 260 | 2 | 88 |
| 9 | C.I. P. V. 23 | B1 | 280 | 1 | 96 |
| 10 | C.I. P. B. 15:2 | B1 | 290 | 2 | 100 |
| 11 | C.I. P. B. 15:3 | B2 | 310 | 6 | 97 |
| 12 | C.I. P. G. 7 | B1 | 280 | 1 | 100 |
| 13 | C.I. P. Bk. 7 | B1 | 300 | 4 | 100 |

**Tabelle 2**

| Bsp. | Pigment | | Additiv (B3) | Additiv (C2) | FAE |
|---|---|---|---|---|---|
| | (A) | x kg | y kg | z kg | |
| 14 | C.I. P. Y. 74 | 75 | 20 | 5 | 100 |
| 15 | C.I. P. Y. 138 | 75 | 20 | 5 | 99 |
| 16 | c.I. P. B. 15:3 | 80 | 16 | 4 | 97 |
| 17 | C.I. P. Bk. 7 | 75 | 20 | 5 | 98 |

## Patentansprüche

1. Feste Pigmentzubereitungen, enthaltend als wesentliche Bestandteile
(A) mindestens 60 Gew.% mindestens eines Pigments,
(B) 10 bis 40 Gew.-% mindestens eines nichtionischen oberflächenaktiven Additivs auf der Basis von Polyethern, wobei die festen Pigmentzubereitungen als Komponente (B) Alkylenoxidblockcopolymere und/oder Alkylenoxidaddukte an mindestens bifunktionelle Amine oder Alkohole enthalten und
(C) 0,1 bis 10 Gew.-% mindestens eines anionischen oberflächenaktiven Additivs auf der Basis von Sulfonaten, Sulfaten, Phosphonaten oder Phosphaten,
wobei die Summe der Gewichtsprozente 100 Gew.-% nicht überschreitet.

2. Feste Pigmentzubereitungen nach Anspruch 1, die als Komponente (C) Arylsulfonate und/oder Ethersulfate enthalten.

3. Feste Pigmentzubereitungen nach Anspruch 1 oder 2, die als Komponente (C) Etherphosphate enthalten.

4. Feste Pigmentzubereitungen nach den Ansprüchen 1 bis 3, die in Form von Granulaten mit einer mittleren Korngröße von 50 bis 5000 µm und einer BET-Oberfläche von ≤ 15 m²/g vorliegen.

5. Verfahren zur Herstellung von festen Pigmentzubereitungen gemäß den Ansprüchen 1 bis 4, **dadurch gekennzeichnet, daß** man das Pigment (A) zunächst in wäßriger, zumindest einen Teil des Additivs (B) enthaltender Suspension entweder in Gegenwart des Additivs (C) einer Naßzerkleinerung unterwirft oder das Additiv (C) anschließend zugibt und die Suspension dann, gegebenenfalls nach Zugabe der restlichen Menge Additiv (B), trocknet.

6. Verfahren zur Einfärbung von hochmolekularen organischen und anorganischen Materialen, **dadurch gekennzeichnet, daß** man feste Pigmentzubereitungen gemäß den Ansprüchen 1 bis 4 durch Einrühren oder Schütteln in diese Materialien einträgt.

7. Verfahren nach Anspruch 6, **dadurch gekennzeichnet, daß** man Lacke, Anstrichmittel, Druckfarben, Tinten und Beschichtungssysteme einfärbt, die als flüssige Phase Wasser, organische Lösungsmittel oder Mischungen von Wasser und organischen Lösungsmitteln enthalten.

8. Verfahren zur Einfärbung von hochmolekularen organischen und anorganischen Materialien unter Verwendung von Farbmischsystemen, **dadurch gekennzeichnet, daß** man feste Pigmentzubereitungen gemäß den Ansprüchen 1 bis 4 als Mischkomponenten einsetzt.

## Claims

1. A solid pigment preparation comprising as essential constituents
(A) at least 60% by weight of at least one pigment,
(B) from 10 to 40% by weight of at least one nonionic surface-active additive based on polyethers, the solid pigment preparations comprising, as component (B), alkylene oxide block copolymers and/or alkylene oxide adducts with at least bifunctional amines or alcohols, and
(C) from 0.1 to 10% by weight of at least one anionic surface-active additive based on sulfonates, sulfates, phosphonates or phosphates,
the sum total of the weight percentages not exceeding 100% by weight.

2. The solid pigment preparation according to claim 1, wherein component (C) comprises arylsulfonates and/or ether sulfates.

3. The solid pigment preparation according to claim 1 or 2, wherein component (C) comprises ether phosphates.

4. The solid pigment preparation according to any of claims 1 to 3 in the form of granules having an average particle size from 50 to 5000 µm and a BET surface area of ≤ m²/g.

5. A process for producing solid pigment preparations according to any of claims 1 to 4, which comprises wet-comminuting the pigment (A) in aqueous suspension in the presence of some or all of additive (B) and in the presence or absence of additive (C), subsequently adding additive (C) if the wet-comminuting was carried out in its absence, and then drying the suspension, if necessary after the rest of additive (B) has been added.

6. A process for pigmenting macromolecular organic and inorganic materials, which comprises incorporating solid pigment preparations according to any of claims 1 to 4 into these materials by stirring or shaking.

7. The process according to claim 6 for pigmenting coatings, paints, printing inks, liquid inks, and finish systems where the liquid phase comprises water, organic solvents or mixtures of water and organic solvents.

8. A process for pigmenting macromolecular organic and inorganic materials using color-mixing systems, which comprises using solid pigment preparations according to any of claims 1 to 4 as mixing components.

## Revendications

1. Préparations pigmentaires solides, contenant comme constituants essentiels
(A) au moins 60% en poids d'au moins un pigment,
(B) 10 à 40% en poids d'au moins un additif tensioactif non ionique à base de polyéthers, les préparations pigmentaires solides contenant comme composant (B) des copolymères à blocs d'oxydes d'alkylène et/ou des produits d'addition d'oxydes d'alkylène sur des amines ou des alcools au moins difonctionnel(le)s, et
(C) 0,1 à 10% en poids d'au moins un additif tensioactif anionique à base de sulfonates, de sulfates, de phosphonates ou de phosphates,
où la somme des % en poids ne dépasse pas 100% en poids.

2. Préparations pigmentaires solides selon la revendication 1, qui contiennent comme composant (C) des arylsulfonates et/ou des éthersulfates.

3. Préparations pigmentaires solides selon la revendication 1 ou 2, qui contiennent comme composant (C) des étherphosphates.

4. Préparations pigmentaires solides selon les revendications 1 à 3, qui se trouvent sous forme de granulats présentant une grosseur moyenne des grains de 50 à 5000 µm et une surface BET ≤ 15 m²/g.

5. Procédé pour la préparation de préparations pigmentaires solides selon les revendications 1 à 4, **caractérisé en ce qu'**on soumet le pigment (A) d'abord, en suspension aqueuse, contenant au moins une partie de l'additif (B), soit en présence de l'additif (C), à un broyage humide, soit on ajoute l'additif (C) ensuite, puis on sèche la suspension, le cas échéant après addition de la quantité résiduelle d'additif (B).

6. Procédé pour la teinture de matériaux organiques et inorganiques de haut poids moléculaire, **caractérisé en ce qu'**on introduit des préparations pigmentaires solides selon les revendications 1 à 4 par délayage ou agitation dans ces matériaux.

7. Procédé selon la revendication 6, **caractérisé en ce qu'**on teint des laques, des enduits, des encres d'imprimerie, des encres et des systèmes de revêtement qui contiennent comme phase liquide de l'eau, des solvants organiques ou des mélanges d'eau et de solvants organiques.

8. Procédé pour la teinture de matériaux organiques et inorganiques de haut poids moléculaire en utilisant des systèmes de mélange de couleurs, **caractérisé en ce qu'**on utilise des préparations pigmentaires solides selon les revendications 1 à 4 comme composants du mélange.
